# EUROPEAN PATENT SPECIFICATION

(11) **EP 3 603 387 B1**
(45) Date of publication and mention of the grant of the patent: **09.12.2020**
(21) Application number: 18775436.1
(22) Date of filing: 19.02.2018
(51) Int. Cl.: A01K 31/22, A01K 31/18, B66F 9/00

(54) **LIFT DEVICE FOR MULTILEVEL AVIARIES**
HEBEVORRICHTUNG FÜR MEHRSTÖCKIGE VOLIEREN
DISPOSITIF ÉLÉVATEUR DE VOLIÈRES MULTINIVEAU

(30) Priority: 29.03.2017 ES 201730356 U
(43) Date of publication of application: 05.02.2020
(73) Proprietor: Vilella&Farias, S.L., 25154 Castelldans (Lleida) (ES)
(72) Inventor: VILELLA ORONICH, Xabier, 25154 Castelldans (Lleida) (ES)
(74) Representative: Ungria López, Javier
(86) International application number: PCT/ES2018/070111
(87) International publication number: WO 2018/178429

(56) References cited:
- WO-A1-2011/004926
- WO-A1-2016/076446
- NL-C2- 1 024 938
- US-A- 4 292 928

## Description

### OBJECT OF THE INVENTION

The present invention falls within the technical field of equipment for housing animals, more specifically, aviary-type housings for raising and farming poultry, and, in particular, the invention relates to a lift device that allows the birds to be transported up or down through the different levels of a multilevel aviary.

### BACKGROUND OF THE INVENTION

In the field of poultry farming, current facilities may be classified into two main groups. The first group consists of what is known as cages or battery cages, wherein the hens remain inside a cage and lay eggs in the same, these eggs then being collected and transported out of the cage, generally in an automated fashion.

Current regulations on the well-being of farm animals, aiming to achieve better conditions for said animals, have made it so that nowadays the most common new farm installations are what are known as ecological systems or aviaries, wherein hens have freedom of movement within a shed with appropriate dimensions based on the number of hens it houses. On occasions, based on the degree of freedom of the sheds, they may have exits to allow the hens to go outside to the surrounding areas.

Furthermore, it may be considered that the life of a laying hen consists of two phases. A first phase, known as the raising phase, which starts from the birth of the hen until its adult life, which is considered to begin approximately 16 weeks after birth. The second phase is called the laying phase, which is when the adult hen is now able to lay eggs, which takes place starting at the 16th week and lasting up until the hen is slaughtered, which takes place approximately 20 months after birth.

The environments through which a hen passes during each phase of its life are considerably different with regard to dimensions, height, number and arrangement of feeders and troughs, etc., and thus hens are usually raised in one environment and later transferred to another for the laying phase. In this sense, it is common for some farmers to focus on the raising phase and others to focus on the laying phase, and as such, a farmer who has laying hens on his farm usually buys them already raised from a third party.

Raising hens in closed cage systems is the most common form, since battery cages can be arranged on several levels, reducing costs and space. Theoretically, hens raised in cages can subsequently be transferred to an open aviary system for the laying phase.

However, there are serious problems in adapting hens raised in cages to the more open environments of aviaries. A hen living in an aviary has to be able to move on its own between the different levels that are usually arranged in said aviaries, such as the floor, the area for laying eggs, the perching area for sleeping, etc. A hen raised in a cage has not yet learnt to make the small flights necessary to live in an aviary, which makes it necessary to buy hens raised in an aviary to lay eggs in aviaries, the price of said hens being significantly higher than those raised in cages.

Dutch patent document NL 1 024 938 C2 discloses an aviary comprising multiple floors, one above the other, together with access arrangements for at least some of the birds to the floors. On each floor are several laying nests and perches are present. The connection between the lowest floor and the second is formed by two paternoster-type lifts provided with plates connected by an endless conveyor belt.

### DESCRIPTION OF THE INVENTION

The object of the invention consists of a lift device, preferably conceived to be installed in multilevel aviaries with the aim of helping the birds housed in said aviary to move up or down through the different levels without needing to fly.

To do so, the device comprises a motor, preferably electric, connected to an upper end of the aviary, said motor having a variable rotation, the output shaft of which is integrally connected to cables which, in turn, are connected to horizontal platforms on which the birds housed in the aviary rest in order to move up or down.

The lift device for multilevel aviaries has a series of advantages, noteworthy among which is the fact that it makes it so it is not necessary to buy hens raised in an aviary, which are trained to make vertical movements, to be able to make suitable use of the multilevel facilities, with an estimated cost reduction of 25% to 45%, depending on the origin of said hens.

Also from an economic standpoint, it facilitates an extension of the productive cycle of the birds, since common problems such as excessive weight or a loss of plumage which normally lead to an early slaughter, due to the fact that said problems prevent the birds from accessing the different levels of the aviary, are avoided thanks to the assistance in mobility provided by the lift device.

Finally, from the point of view of the well-being of the animals, the device also implies a notable improvement, given that it favors the reduction of bone fractures caused by accidental collisions with the structure of the aviary when the hens are moving between the different levels or making jumps or short flights. In addition, the birds experience less stress, leading to a reduction in the amount of injuries caused by pecking as well as in the consumption of feed and the amount of dust in the air.

### DESCRIPTION OF THE DRAWINGS

As a complement to the description and for the purpose of helping to make the features of the invention more readily understandable, in accordance with a preferred practical exemplary embodiment thereof, said description is accompanied by a set of drawings constituting an integral part thereof which, by way of illustration and not limitation, represent the following:
Figure 1 shows a side view of a longitudinal cross section of the device installed in a multilevel aviary, in which the main constituting elements thereof can be seen.
Figure 2 shows a perspective view of the device in operation.

### PREFERRED EMBODIMENT OF THE INVENTION

What follows is a detailed description, with the help of the figures referenced above, of an exemplary embodiment of the object of the present invention.

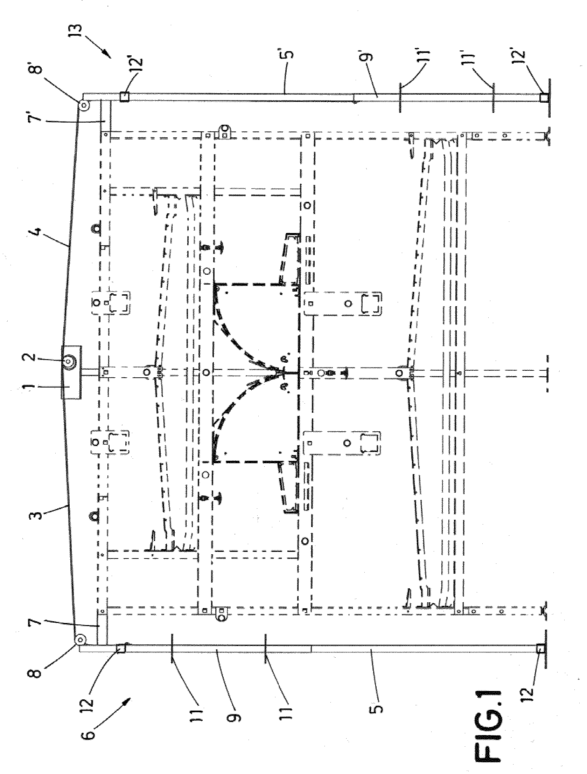

The lift device for multilevel aviaries described herein, schematically shown in figure 1, is made up of an electric motor (1), with variable rotation, connected to an upper end of the aviary, and a rotary shaft (2), transverse to the motor (1), which extends throughout the entire length of the aviary, the rotation thereof being actuated by said motor (1).

First cables (3) and second cables (4) are integrally connected to said rotary shaft (2) such that the rotation of the motor (1) in a specific direction causes, in turn, the winding of the first cables (3) on the rotary shaft (2) and unwinding of the second cables (4), while the rotation in the opposite direction unwinds the first cables (3) and winds the second cables (4) on said rotary shaft (2).

An external programmable controller, not shown in the attached figures, controls the actuation of said motor (1), as well as the direction of the rotation thereof, and therefore it also controls the direction of the rotation of the rotary shaft (2).

Furthermore, a first gantry (100), made up of two first vertical posts (5) parallel to each other, is connected to a first side (6) of the aviary. Each one of the first posts (5) is connected by the respective upper ends thereof to columns of the first side (6) of the aviary by means of corresponding first arms (7) which extend perpendicularly between the first posts (5) and the columns.

Likewise, each one of the first posts (5) incorporates a first pulley (8) located on the upper end thereof, and a first outer sleeve (9), longitudinally movable along the first post (5).

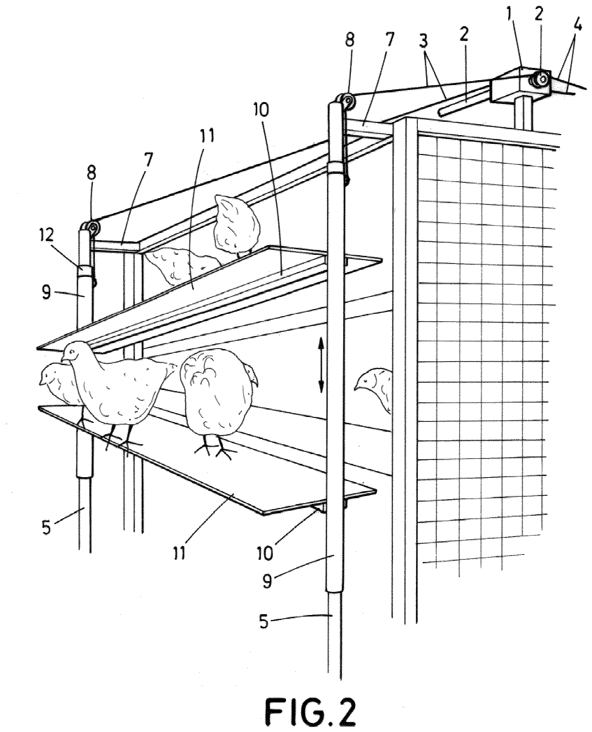

As can be seen in figure 2, first crossbeams (10), essentially horizontal, are integrally connected by the respective ends thereof to corresponding first sleeves (9) which move along the first posts (5). In turn, arranged on each one of said first crossbeams (10) is a first essentially horizontal platform (11), intended to act as a support surface for the birds housed in the aviary during the upward and downward movements on the first side (6) of the aviary.

Each one of the first sleeves (9) is integrally connected to each one of the first cables (3), passing through the respective first pulleys (8), such that the winding or unwinding of the first cables (3) on the rotary shaft (2) by the rotation of the motor (1) causes an integral longitudinal upward or downward movement of the first sleeves (9) along the first posts (5) and, therefore, raises or lowers the first platforms (11) on the first side (6) of the aviary.

Also envisaged is the incorporation of respective first stops (12) marking the end of the path, located at the upper and lower ends of each of the first posts (5) for limiting the upward and downward movement of the first sleeves (9). In a second embodiment, the first stops (12) are removed and the limiting of the movements of the first sleeves (9) is carried out by regulating the direction of rotation of the motor (1) by the external programmable controller.

All of the previous description is applicable to second cables (4), which run on a second side (13) of the aviary, opposite the first side (6), wherein a second gantry (100') is located, made up of second posts (5') connected to the second side (6) of the aviary by means of corresponding second arms (7').

Likewise, each one of the second posts (5') incorporates respective second pulleys (8') through which one of the second cables (4) passes, and second sleeves (9'), to which second crossbeams (10') are connected, on which second platforms (11') are arranged. Also envisaged is the incorporation of second stops (12') at the ends of the second posts (5').

Thus, the rotation of the rotary shaft (2) of the motor (1) in one direction produces, for example, the winding of the first cables (3) on said rotary shaft (2) at the same time as the second cable (4) is unwound. Said winding of the first cables (3), in turn, causes the first sleeves (9) to move in an upwards vertical direction along the first posts (5) and, as such, the first platforms (11) are also raised along the first side (6) of the aviary, such that the birds can move up to the upper areas.

In turn, the corresponding unwinding of the second cables (4) on the rotary shaft (2) causes a downward vertical movement of the second sleeves (9') along the second posts (5') and, as such, the second platforms (11') are lowered along the second side (13) of the aviary so that the birds can comfortably and effortlessly move down from a higher level to a lower level.

The moment the first sleeves (9), in the upward movement thereof on the first side (6), make contact with the first stops (12) arranged on the upper end of the first posts (5), the motor (1) receives a signal from the external controller to halt the actuation thereof, thus stopping the rotation of the rotary shaft (2).

## Claims

1. A lift device for multilevel aviaries, intended to facilitate the raising and lowering of birds to different levels of the aviary, **characterized in that** it comprises:
- a motor (1), with a variable rotation, controlled by an external controller, connectable to an upper end of the aviary,
- a rotary shaft (2), transverse to the motor (1), which extends along the entire length of the aviary and is able to be actuated by said motor (1),
- first cables (3), wound on the rotary shaft (2) of the motor,
- a first gantry (100), able to be positioned in the proximity of a first side (6) of the aviary, the first gantry (100), in turn, comprising:
- first vertical posts (5) parallel to one another,
- first arms (7) connected perpendicularly to upper ends of the first posts (5) and to the columns of the first side (6) of the aviary,
- first pulleys (8), located on the upper ends of each one of the first posts (5), through which the respective first cables (3) run,
- first sleeves (9), longitudinally movable on the first posts (5), able to be actuated by the first cables (3) to which they are integrally connected, and
- first platforms (11), able to be moved to different heights on the first gantry (100), essentially horizontal and integrally connected to the first sleeves (9), first platforms (11) on which the birds can mount to change levels on the first side (6) of the aviary.

2. The lift device according to claim 1, **characterized in that** it incorporates first stops (12) marking the end of the path, located on the first posts (5), for limiting the longitudinal movement of the first sleeves (9).

3. The lift device according to claim 1, **characterized in that** it additionally incorporates:
- second cables (4), wound on the rotary shaft (2) in the opposite direction to the first cables (3),
- a second gantry (100'), able to be positioned in the proximity of a second side (13) of the aviary, opposite the first side (6), the second gantry (100') comprising:
- second vertical posts (5') parallel to one another,
- second arms (7') connected perpendicularly to upper ends of the second posts (5') and to columns of the second side (13) of the aviary,
- second pulleys (8'), located on the upper ends of each one of the second posts (5'), through which the respective second cables (4) run,
- second sleeves (9'), longitudinally movable on the second posts (5'), able to be actuated by the second cables (4) to which they are integrally connected, and
- second platforms (11'), able to be moved to different heights on the second gantry (100'), essentially horizontal and integrally connected to the second sleeves (9'), second platforms (11') on which the birds can be mounted to change levels on the second side (13) of the aviary.

4. The lift device according to claim 3, **characterized in that** it incorporates second stops (12') marking the end of the path, located on the second posts (5') for limiting the longitudinal movement of the second sleeves (9').

5. The lift device according to claim 1, **characterized in that** it incorporates first essentially horizontal crossbeams (10), integrally connected to the respective first sleeves (9) of the first posts (5) for supporting the first platforms (11).

6. The lift device according to claim 3, **characterized in that** it incorporates second essentially horizontal crossbeams (10'), integrally connected to the respective second sleeves (9') of the second posts (5') for supporting the second platforms (11').

## Patentansprüche

1. Hebevorrichtung für mehrstufige Volieren, die das Anheben und Absenken von Vögeln auf verschiedene Ebenen der Voliere erleichtern soll, **dadurch gekennzeichnet, dass** sie umfasst:
- einen Motor (1) mit variabler Drehung, der von einer externen Steuereinheit gesteuert wird, die mit einem Oberen Ende der Voliere verbunden werden kann,
- eine Drehwelle (2), die quer zu dem Motor (1) verläuft und sich entlang der gesamten Länge der Voliere erstreckt und von dem Motor (1) betätigt werden kann,
- erste Seile (3), die auf die Drehwelle (2) des Motors gewickelt sind,
- ein erstes Portal (100), das in der Nähe einer ersten Seite (6) der Voliere angeordnet werden kann, wobei das erste Portal (100) wiederum umfasst:
- erste vertikale Pfosten (5), die parallel zueinander sind,
- erste Arme (7), die senkrecht zu oberen Enden der ersten Pfosten (5) und zu den Säulen der ersten Seite (6) der Voliere angeschlossen sind,
- erste Riemenscheiben (8), die sich an den oberen Enden jedes der ersten Pfosten (5) befinden und durch die die jeweiligen ersten Seile (3) verlaufen,
- erste Hülsen (9), die an den ersten Pfosten (5) in Längsrichtung beweglich sind und von den ersten Seilen (3) betätigt werden können, mit denen sie einstückig verbunden sind, und
- erste Plattformen (11), die auf dem ersten Portal (100) in unterschiedliche Höhen bewegt werden können und im Wesentlichen horizontal und einstückig mit den ersten Hülsen (9) verbunden sind, wobei sich die Vögel auf den ersten Plattformen (11) niederlassen können, um das Niveau auf der ersten Seite (6) der Voliere zu ändern.

2. Hebevorrichtung nach Anspruch 1, **dadurch gekennzeichnet, dass** sie erste Anschläge (12) aufweist, die das Ende des Weges markieren und sich an den ersten Pfosten (5) befinden, um die Längsbewegung der ersten Hülsen (9) zu begrenzen.

3. Hebevorrichtung nach Anspruch 1, **dadurch gekennzeichnet, dass** sie zusätzlich umfasst:
- zweite Seile (4), die auf die Drehwelle (2) in entgegengesetzter Richtung zu den ersten Seilen (3) gewickelt sind,
- ein zweites Portal (100'), das in der Nähe einer zweiten Seite (13) der Voliere gegenüber der ersten Seite (6) positioniert werden kann, wobei das zweite Portal (100') umfasst:
- zweite vertikale Pfosten (5'), die parallel zueinander sind,
- zweite Arme (7'), die senkrecht zu den oberen Enden der zweiten Pfosten (5') und zu Säulen der zweiten Seite (13) der Voliere angeschlossen sind,
- zweite Riemenscheiben (8'), die sich an den oberen Enden jedes der zweiten Pfosten (5') befinden und durch die die jeweiligen zweiten Seile (4) verlaufen,
- zweite Hülsen (9'), die in Längsrichtung an den zweiten Pfosten (5') beweglich sind und von den zweiten Seilen (4) betätigt werden können, mit denen sie einstückig verbunden sind, und
- zweite Plattformen (11'), die auf dem zweiten Portal (100') in unterschiedliche Höhen bewegt werden können und im Wesentlichen horizontal und einstückig mit den zweiten Hülsen (9') verbunden sind, wobei sich auf den zweiten Plattformen (11') die Vögel niederlassen können, um die Niveaus auf der zweiten Seite (13) der Voliere zu ändern.

4. Hebevorrichtung nach Anspruch 3, **dadurch gekennzeichnet, dass** sie zweite Anschläge (12') aufweist, die das Ende des Weges markieren und an den zweiten Pfosten (5') angeordnet sind, um die Längsbewegung der zweiten Hülsen (9') zu begrenzen.

5. Hebevorrichtung nach Anspruch 1, **dadurch gekennzeichnet, dass** sie erste im wesentlichen horizontale Querträger (10) umfasst, die einstückig mit den jeweiligen ersten Hülsen (9) der ersten Pfosten (5) zum Halten der ersten Plattformen (11) verbunden sind.

6. Hebevorrichtung nach Anspruch 3, **dadurch gekennzeichnet, dass** sie zweite im wesentlichen horizontale Querträger (10') umfasst, die einstückig mit den jeweiligen zweiten Hülsen (9') der zweiten Pfosten (5') zum Halten der zweiten Plattformen (11') verbunden sind.

## Revendications

1. Dispositif élévateur pour des volières à niveaux multiples, prévu pour faciliter l'élévation et l'abaissement d'oiseaux à différents niveaux de la volière, **caractérisé en ce qu'**il comprend :
- un moteur (1), avec une rotation variable, commandé par une commande extérieure, pouvant être connecté à une extrémité supérieure de la volière,
- un arbre tournant (2), transversal au moteur (1), qui s'étend sur la longueur entière de la volière et peut être actionné par ledit moteur (1),
- des premiers câbles (3), enroulés sur l'arbre tournant (2) du moteur,
- un premier portique (100), pouvant être positionné à proximité d'un premier côté (6) de la volière, le premier portique (100), à son tour, comprenant :
- des premiers piliers (5) verticaux parallèles les uns aux autres,
- des premiers bras (7) reliés perpendiculairement à des extrémités supérieures des premiers piliers (5) et aux colonnes du premier côté (6) de la volière,
- des premières poulies (8), situées sur les extrémités supérieures de chacun des premiers piliers (5), à travers lesquelles les premiers câbles (3) respectifs passent,
- des premiers manchons (9), mobiles longitudinalement sur les premiers piliers (5), pouvant être actionnés par les premiers câbles (3) auxquels ils sont reliés intégralement, et
- des premières plates-formes (11), pouvant être déplacées à différentes hauteurs sur le premier portique (100), sensiblement horizontales et reliées intégralement aux premiers manchons (9), premières plates-formes (11) sur lesquelles les oiseaux peuvent monter pour changer de niveaux sur le premier côté (6) de la volière.

2. Dispositif élévateur selon la revendication 1, **caractérisé en ce qu'**il inclut des premiers arrêts (12) marquant l'extrémité du trajet, situés sur les premiers piliers (5), pour limiter le mouvement longitudinal des premiers manchons (9).

3. Dispositif élévateur selon la revendication 1, **caractérisé en ce qu'**il inclut en outre ;
- des seconds câbles (4), enroulés sur l'arbre tournant (2) dans la direction opposée aux premiers câbles (3),
- un second portique (100'), pouvant être positionné à proximité d'un second côté (13) de la volière, opposé au premier côté (6), le second portique (100') comprenant :
- des seconds piliers (5') verticaux parallèles les uns aux autres,
- des seconds bras (7') reliés perpendiculairement à des extrémités supérieures des seconds piliers (5') et à des colonnes du second côté (13) de la volière,
- des secondes poulies (8'), situées sur les extrémités supérieures de chacun des seconds piliers (5'), à travers lesquelles les seconds câbles (4) respectifs passent,
- des seconds manchons (9'), mobiles longitudinalement sur les seconds piliers (5'), pouvant être actionnés par les seconds câbles (4) auxquels ils sont reliés intégralement, et
- des secondes plates-formes (11'), pouvant être déplacées à différentes hauteurs sur le second portique (100'), sensiblement horizontales et reliées intégralement aux seconds manchons (9'), secondes plates-formes (11') sur lesquelles les oiseaux peuvent être montés pour changer de niveaux sur le second côté (13) de la volière.

4. Dispositif élévateur selon la revendication 3, **caractérisé en ce qu'**il inclut des seconds arrêts (12') marquant l'extrémité du trajet, situés sur les seconds piliers (5') pour limiter le mouvement longitudinal des seconds manchons (9').

5. Dispositif élévateur selon la revendication 1, **caractérisé en ce qu'**il inclut des premières traverses (10) sensiblement horizontales, reliées intégralement aux premiers manchons (9) respectifs des premiers piliers (5) pour supporter les premières plates-formes (11).

6. Dispositif élévateur selon la revendication 3, **caractérisé en ce qu'**il inclut des secondes traverses (10') sensiblement horizontales, reliées intégralement aux seconds manchons (9') respectifs des seconds piliers (5') pour supporter les secondes plates-formes (11').
